# EUROPEAN PATENT APPLICATION

(11) **EP 1 967 993 A1**
(43) Date of publication of application: **10.09.2008**
(21) Application number: 08101439.1
(22) Date of filing: 08.02.2008
(51) Int. Cl.: G06Q 10/00, G06F 21/00

(54) **Dynamic workflow resource authentication and discovery**

(30) Priority: 21.02.2007 US 677250
(71) Applicant: Novell, Inc., Provo, Utah 84606-6194 (US)
(72) Inventor: Carter, Stephen R, Spanish Fork, UT 84660 (US)
(74) Representative: Hanna, Peter William Derek

(57) **Abstract**

Techniques for dynamic workflow resource authentication and discovery are presented. A processing workflow is augmented with a dynamic resource that becomes available and is authenticated as the workflow is processed. A reference to the newly discovered resource is provided (110) and permits tasks of the workflow to be handled (130) by the newly discovered resource via the dynamically supplied reference.

## Description

### Field

The invention relates generally to workflow processing. More particularly, the invention relates to techniques for dynamically authenticating and discovering workflow resources.

### Background

Workflow and business processes are critical to the daily operations of most enterprises. In fact, enterprises have increasingly attempted to automate their daily operations in an effort to streamline expenses and reduce product or service time to market. These operations are often referred to as tasks associated with a workflow. Each task has a number of inter-task dependencies, such that a particular task may require that other tasks be completed before that particular task can be addressed. A product or service release may entail traversing many tasks within an enterprise before the produce or service is actually released.

One problem associated with workflow processing is that it is often static in nature. In other words, when a workflow or set of tasks are being monitored, the users that can assist in handling the tasks are predetermined and known in advance. So, if a particular user is offline when a workflow begins processing then that user may not be considered as a candidate to assist in tasks of the resource should the user subsequently come on line and be available. This is can be a significant issue in dynamic and chaotic environments, where users log in to and out of their enterprise's systems with increasing regularity. Thus, the true nature of the enterprise's environment is not capable of being properly reflected and handled with traditional workflow processing.

Another problem associated with workflow processing is security. Intruders are becoming more and more adept at feigning the appearance of legitimate users in order to penetrate and comprise enterprise systems. As a result, enterprises have instituted a variety of security measures. Many workflow related security issues stem from the fact that an enterprise is diverse and includes operations over a large network. The various components of the workflow may have to interoperate across diverse environments; this flexibility also, unfortunately, presents many security challenges to ensure an intruder has not penetrated the workflow. Because of this, many enterprises have elected to keep workflow processing limited to a defined environment from which security can be more closely monitored and controlled. However, this limits the usefulness and desirability of workflow processing for many enterprises.

Thus, what are needed are techniques, which allow for improved workflow processing with enhanced security.

### Summary

The present invention provides techniques for dynamic workflow resource authentication and discovery, in accordance with claims which follow. More specifically, and in an embodiment, a method is provided for resource discovery and authentication within the context of workflow processing. A reference to a resource is received; the reference for use in a workflow that is already processing. Furthermore, the resource is dynamically authenticated by an identity service and policy associated with the resource is enforced. Next, a task of the workflow is assigned to the resource via the reference.

### Brief Description of the Drawings

FIG. 1 is a diagram of a method for a workflow resource to be dynamically discovered and authenticated within the workflow, according to an example embodiment.

FIG. 2 is a diagram of another method for a workflow resource to be dynamically discovered and authenticated within the workflow, according to an example embodiment.

FIG. 3 is a diagram of dynamic workflow resource discovery and authentication system, according to an example embodiment.

FIG. 4 is a diagram of another workflow resource discovery and authentication system, according to an example embodiment.

FIG. 5 is an example architectural layout of various components that implemented the techniques presented herein, according to an example embodiment.

### Detailed Description

A "workflow" permits the movement or transition of documents, data, and/or tasks through a process. The workflow may be defined for a given process in terms of tasks, which are associated with completing the process. Each task may have interdependencies with other tasks. Business processes may be logically represented within the workflow as interdependent tasks, where each task includes its own documents, data, and dependencies. The workflow itself may be represented in a machine-readable format and accessible to a machine (processing device). The format may be viewed as a data structure or as metadata that is managed by a workflow manager. In an embodiment, the workflow is implemented in an extensible markup language (XML) format.

A "workflow manager" is a set of software instructions or a service that resides in a machine accessible medium and processes on a machine for purposes of managing the transitions among tasks of a workflow. Each task itself may be viewed as a resource, such as a service, a device, a document, a database, a directory, groupings of these, *etc.* Furthermore, each task or group of tasks within the workflow may be assigned or associated with another working resource (e.g., worker, owner, *etc.),* such as a user. Some tasks can be automated while other tasks are partially manual (e.g., a manager's signature approval for a laptop purchase beyond a certain amount). The partially manual tasks may be assigned and handled by defined users having defined roles or permissions, which are set by identity resolution and/or by policy enforcement.

Thus, a resource may include a user, a group of users (perhaps represented by a role assignment), a service, a system, a processing device, a peripheral device, a directory, a document, a storage device, *etc.* The workflow is made up of resources that are defined as tasks and by other resources that can process and complete the tasks (e.g., owners, auditors, workers, *etc.).*

In various embodiments presented herein, resources are assigned identities for defined contexts. An identity for a given resource is unique within a given context. Each resource may have more than one identity. Resource identifiers or identity information assist in defining a particular resource's identity. Identities can be semantic or crafted. An example of semantic identities is defined in our European Patent Application No. 1,780,648A entitled "Semantic Identities". An example of crafted identities is described in our European Patent Application No. 1,773,020A entitled "Crafted Identities".

In some cases, a third-party service identified as an identity service or an identity provider is used to authenticate identifiers or identity information of a resource and supply an identity for that resource within a given or requested context. Examples of identity services or identity providers may be found in our European Patent Application No. 1,560,394A entitled "Techniques for Dynamically Establishing and Managing Authentication and Trust Relationships"; our European Patent Application No. 1,560,100A entitled "Techniques for Establishing and Managing a Distributed Credential Store"; and our European Patent Application No. 1,562,100A entitled "Techniques for Dynamically Establishing and Managing Trust Relationships".

It is also noted that the workflow does not have to be wholly contained and processed within the same environment. That is, the workflow may be distributed and associated with actions that are processed in different and disparate environments. An example, of such workflow processing techniques was presented in our European Patent Application No. 1,696,378A entitled "Distributed Workflow Techniques".

In fact, entire data centers may be dynamically authenticated by an identity service and may handle any given task or set of tasks for a workflow. Thus, and entire data center may be viewed as a single type of resource. An example of identity controlled data centers may be found in U.S. Patent No. 11/583,667 entitled "Identity Controlled Data Center," filed on October 19, 2006; assigned to Novell®, Inc. of Provo, Utah.

According to an embodiment, the techniques presented herein are implemented in products associated with Identity and Security Management (ISM) distributed by Novell®, Inc. of Provo, Utah.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

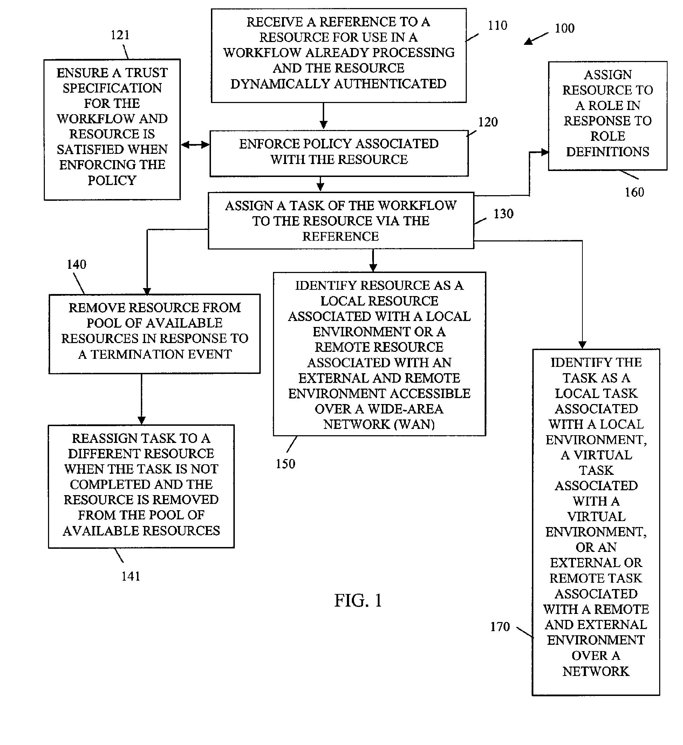

It is within this context, that various embodiments of the invention are now presented with reference to the FIGS. 1-5.

FIG. 1 is a diagram of a method 100 for a workflow resource to be dynamically discovered and authenticated within the workflow, according to an example embodiment. The method 100 (hereinafter "resource discovery service") is implemented as instructions in a machine-accessible and readable medium. The instructions when executed by a machine (processing device) perform the processing depicted in FIG. 1. The resource discovery service is also operational over and processes within a network. The network may be wired, wireless, or a combination of wired and wireless. In some cases, the network is a wide-area network (WAN), such as the Internet.

Initially, a workflow is being processed within a first environment. The resource discovery service manages the workflow within the first environment. Once the workflow is already processing within the first environment, one or more newly discovered resources that can assist in handling tasks of the workflow become known to the resource discovery service.

Specifically, at some point after the workflow has started processing, at 110, the resource discovery service receives a reference to a resource for use in the workflow. The resource is dynamically authenticated via an identity service that acts on behalf of the resource discovery service. Once the authenticated resource is communicated to the resource discovery service, at 120, the resource discovery service enforces policy to ensure that the newly discovered resource is registered and made available for use with the workflow.

As an example, consider a user that has his laptop turned off because of airplane travel. When the user exits the plane, the user turns on his laptop and signs in or logs in to an identity provider/service. This identity service may be the same one used and known to the resource discovery service or may be one that is not known or used by the resource discovery service. If the user's identity service is one that is not known or used by the resource discovery service, then the user's identity service is capable of communicating and interacting with the identity service that is known and used by the resource discovery service. Once logged into the identity service, an event is raised or policy directs communication to occur to the identity service of the resource discovery service and to a workflow registration service. This registration service then informs the resource discovery service that the user is online and available for use with tasks associated with the workflow.
The specific task or set of tasks that the user may be assigned to is driven by policy.

Accordingly, at 120, the resource discovery service enforces policy against the resource and its perceived availability once an identity for the resource is known and registered as being available for use to the resource discovery service.

According to an embodiment, at 121, the resource discovery service may ensure that a trust specification between the workflow and the newly discovered resource is satisfied when the identity for the resource is known and registered as being available for use to the resource discovery service. The trust specification may define the roles and permissions that the newly discovered resource has vis-à-vis a specific task or set of tasks. The trust specification may also indicate for what length of time or for events may the newly discovered resource is considered legitimate and available for use with the workflow. The trust specification may also define the authentication mechanisms to be used or to be asserted for purposes of considering the newly discovered resource available for use with the workflow.

Once the newly discovered resource is authenticated and is known to the resource discovery service and is considered available for use with the workflow, the newly discovered resource may be dynamically referenced via a link or reference. The original workflow and its metadata defining resources and their relationships may have included a static reference for some resources and may have permitted dynamic resolution or referencing for other resources. So, a newly discovered resource supplies a dynamic handle or a handle that is resolved in real-time or near real-time to access and contact the newly discovered resource. This handle or reference can be in a variety of formats, such as but not limited to a web services interface, a remote procedure call (RPC) interface, an email, an instant message, a text message, a page, a phone number, *etc.*

The dynamic reference or handle to the newly discovered resource is facilitated or provided via the identity service. Thus, when a new resource authenticates to and logs into its identity service, policy dictates that the identity service directly communicates with the resource discovery service or policy dictates that the identity service indirectly communicates with the resource discovery service via the resource discovery service's identity service for purposes of informing the resource discovery service that the new resource is available and for purposes of providing a mechanism (reference) for contacting the new resource. These new resources may themselves be logically viewed as nodes within the workflow, such that the nodes are dynamically populated to the workflow and become known and usable in real-time or near real-time as resources come into existence.

At 130 and once a newly authenticated resource is known and available for use within a workflow, the resource discovery service assigns a task or a group of tasks to the resource within the workflow in response to the evaluation of the policy. In other words, policy or trust specification drives which task or set of tasks that the new resource may be associated with within the workflow. The resource discovery service dynamically assigns the task within the workflow to the new resource using the dynamic reference or communication mechanism to contact the resource and inform the resource that it is assigned the task.

In some cases, at 140, the resource discovery service may remove the resource and its reference from a pool of available resources in response to a termination event. So, if the resource is a user and the user logs out of the network or terminates a network connection, then the resource discovery service detects this event and removes the reference to the resource from the pool of available resources associated with the tasks of the workflow. This may also entail, at 141, that the resource discovery service reassign the previously assigned task from the resource to a different resource. Tasks are dynamically reassigned within the workflow when resources become unavailable. Again, this is a dynamic, real-time, and near real-time task assessment and task reassignment that occurs.

At 150, the newly discovered resource may be dynamically identified by the resource discovery service as a local resource associated with a local environment or a remote resource associated with an external and remote environment and accessible over a WAN (e.g., Internet, World-Wide Web (WWW), *etc.*). The resource can be local to the environment and processing associated with the resource discovery service (e.g., on a same machine or on same set of cooperating machines, *etc.)* or the resource can be external and remote and on a different disparate environment from that which is associated with the resource discovery service.

In an embodiment, at 160, the resource discovery service may assign a role to the newly discovered resource in response to role calculations associated with role definitions and role policies. So, the identity assignment for the newly discovered resource may be mapped statically to a particular role or set of roles or it may be used with dynamically resolved calculations and definitions to set the particular role or set of roles for a given context. It may also be the case that the resource discovery service enlists other proxies or other services to assist in role assignment and role evaluations. Role assignment can simplify administration associated with a workflow my grouping identities of resources and tasks into particular role categories (e.g., management, employee, administrator, end user, *etc.).*

According to an embodiment, at 170, the resource discovery service may also identify the task, which is to be assigned to the resource, as a task that is associated with a local environment, a virtual task associated with a virtual environment, and/or an external or remote task associated with a remote and external environment over a network. So, the tasks themselves may be located and processed by the resource from a variety of locations, such as local, remote, and/or virtual.

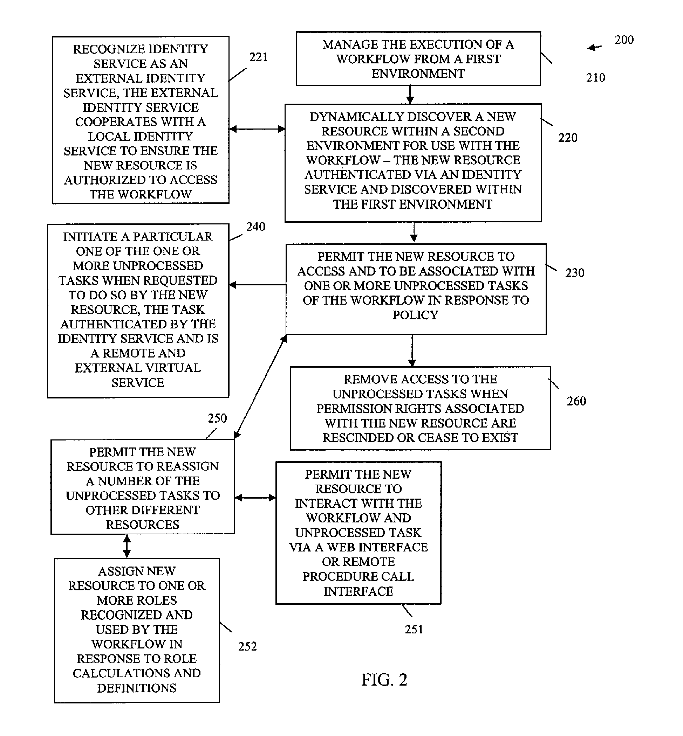

FIG. 2 is a diagram of another method 200 for a workflow resource to be dynamically discovered and authenticated within the workflow, according to an example embodiment. The method 200 (herein after referred to as "resource authentication service") is implemented in a machine-accessible and readable medium as instructions, which when accessed by a machine performs the processing depicted in the FIG. 2. The resource authentication service is also operational over a network; the network may be wired, wireless, or a combination of wired and wireless. The resource authentication service represents an alternative perspective and in some cases an enhanced perspective of the resource discovery service represented by the method 100 of the FIG. 1.

At 210, the resource authentication service manages the execution of a workflow from a first environment. The resource authentication service is responsible for coordinating and assigning tasks and resources within the workflow in a dynamic fashion and for dynamically ensuring that each task and resource is properly trusted and authenticated for accessing the workflow.

At 220, the resource authentication service dynamically discovers a new resource within a second environment for use with the workflow. The new resource is authenticated via an identity service and is discovered and becomes known within the first environment and within the context of the workflow. In an embodiment, the first and second environments are remote from one another across a WAN, such as the Internet, and disparate, such as processing different operating systems or different versions of software services, *etc.*

In an embodiment, at 221, the resource authentication service recognizes the identity service as an external identity service that cooperates with a local identity service to ensure the new resource is authorized to access the workflow. That is, the new resource may use its own identity service for authentication and that identity service may cooperate and communicate with a local identity service associated with the resource authentication service. Since the two identity services trust one another and in fact authenticate to each other, the new resource's identity service may assert that the new resource is authenticated and the resource authentication service's identity service may rely on that assertion to accept that the new resource is in fact authenticated within the first environment for use with the workflow. It is noted that the level of cooperation does not have to be just two (the new resource's identity service and the resource authentication service's identity service); rather, the level of cooperation can span multiple identity services, such as three or more.

At 230, the resource authentication service may permit the new resource to access and to be associated with one or more unprocessed tasks of the workflow in response to policy. That is, once the new resource is authenticated and known within the first environment, the resource authentication service may evaluate policy to decide which unprocessed tasks can be assigned to the new resource.

At 240, the resource authentication service may initiate a particular one or the one or more unprocessed tasks when requested to do so by the new resource. The tasks themselves may be initiated or invoked on behalf of the new resource and may be authenticated by the identity service. The tasks may also be local, remote and external, and/or virtual.

According to an embodiment, at 250, the resource authentication service may permit the new resource, via policy or trust specification, to reassign a number of the unprocessed tasks to other different resources. The new resource may drive a reassignment of the unprocessed tasks. At 251, the new resource may interact with the workflow in a variety of manners, such as but not limited to, a web service interface or a remote procedure call (RPC) interface. Moreover, at 252, the resource authentication service may assign the new resource to one or more roles recognized and used by the workflow in response to role calculations and definitions, as described above with reference to the method 100 of the FIG. 1.

According to an embodiment, at 260, the resource authentication service may remove access to the unprocessed tasks when permission rights associated with the new resource are rescinded or cease to exist. The events or conditions for which access may be revoked can be defined via a trust specification or via policy. In some cases, it may be the identity service that informs the resource authentication service in a dynamic and real-time fashion that the new resource is to no longer be given access to the unprocessed tasks or to the workflow as a whole. Access may be denied or granted at the task level, at a level associated with selective groupings of tasks, or at the level of the entire workflow.

The resource authentication service permits new resources to be dynamically discovered, authenticated, managed, and coordinated within a first environment even when the new resources are associated with entirely different second environments. These features occur in a dynamic and real-time fashion over a WAN, such as the Internet or WWW and are facilitated via one or more identity services. Access permissions and management are driven by identity via application and enforcement of trust specifications and/or policy.

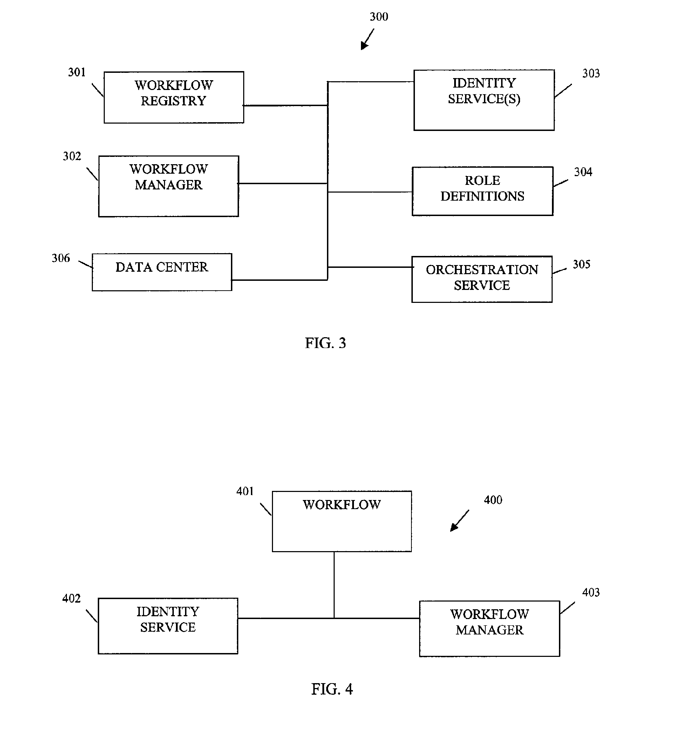

FIG. 3 is a diagram of dynamic workflow resource discovery and authentication system 300, according to an example embodiment. The dynamic workflow resource discovery and authentication system 300 is implemented as instructions on or within a machine-accessible and readable medium. The instructions when executed by a machine perform processing depicted with respect to the methods 100 and 200 of the FIGS. 1 and 2, respectively. The dynamic workflow resource discovery and authentication system 300 is also operational over a network and the network may be wired, wireless, or a combination of wired and wireless.

The dynamic workflow resource discovery and authentication system 300 a workflow registry 301 and a workflow manager 302. In an embodiment, the dynamic workflow resource discovery and authentication system 300 may also include one or more identity services 303, role definitions 304, an orchestration service 305, and/or a data center 306. Each of these and their interactions with one another will now be discussed in turn.

The workflow registry 301 is embodied and implemented in a machine or computer readable medium on a machine and is adapted to be read and modified on the machine for purposes of identifying, discovering, and locating resources used in a workflow. The workflow registry 301 includes identity references to resources that are currently available to a workflow's tasks. Some of these references may be hard coded or static; others of these references are dynamically resolved and populated in real-time to the workflow registry 301. The workflow registry 301 interacts with the workflow manager 302 and may also directly interact with one or more identity services 303.

The workflow manager 302 is a software service that is represented as a set of instructions within a machine-accessible medium and is operable to be processed on a machine. Example processing associated with the workflow manager 302 was presented above in detail with reference to the resource discover service represented by the method 100 of the FIG. 1 and the resource authentication service represented by the method 200 of the FIG. 2.

The workflow manager 302 receives notices from or independently discovers new references to resources in the workflow registry 301. The new references are assigned to tasks of the workflow in response to policy evaluations or trust specifications. The workflow manager 302 may also receive notices from or independently discovers when references are removed from the workflow registry 301. References may be removed when resources exceed authority defined in their trust specifications or when they become unavailable, such as when they are logged off the network or unavailable. When a resource assigned to a task is dynamically discovered as not be available any longer, the workflow manager 302 may reassign that task to another available and authorized resource. The workflow manager 302 coordinates resources and tasks between multiple environments and in a distributed fashion.

According to an embodiment, the dynamic workflow resource discovery and authentication system 300 may also include one or more identity services 303. Example identity services 303 were presented above and incorporated by reference herein. Each identity service 303 is implemented in a machine-accessible medium and is capable of being processed on a machine. Each identity service 303 is also operational over a network. The network may be wired, wireless, or a combination of wired and wireless.

The identity services 303 provide authentication and identity services to the workflow manager 302 for tasks of the workflow and for resources assigned to tasks of the workflow. The identity service 303 may use policy to drive notifications when particular resources or tasks become available within the network and when they are properly authenticated. Similarly, the identity service 303 may use policy to drive notifications when particular resources or tasks that were authenticated and available become de-authenticated or unavailable.

An identity service 303 may cooperate and interact with other identity services 303. So, a resource may interact with its only known identity service 303 and policy may instruct that identity service 303 to contact another identity service 303 known to the workflow manager 302 and that last identity service 303 notifies the workflow manager 302, perhaps through reference population to the workflow registry 301, that resources are available or unavailable for use with the workflow. The identity service 303 authenticates the resource for registration with the workflow registry 301.

In still another embodiment, the dynamic workflow resource discovery and authentication system 300 includes role definitions 304. The role definitions 304 are embodied within a machine-readable and accessible medium and may be accessed via a machine. The role definitions 304 permit the workflow manager 302 or a role assignment service (not shown in FIG. 3) to resolve roles and make role assignments for newly discovered resources. The role assignments may be statically defined or may be dynamically defined and dependent on dynamically evaluated conditions.

In another case, the dynamic workflow resource discovery and authentication system 300 includes an orchestration service 305. The orchestration service 305 is implemented as a set of software instructions in a machine-accessible medium and is capable of being processed by a machine. The orchestration service 305 may be used to dynamically instantiate and configure services associated with a defined task of the workflow. So, a particular task not already processing on a machine associated with the workflow manager 302 may be dynamically configured and started by the orchestration service 305. This permits tasks to be dynamically configured and initiated within the environment of the workflow manager 302 or for that matter within external environments that are remote from the workflow manager 302.

In yet another situation, the dynamic workflow resource discovery and authentication system 300 includes a data center 306. The data center 306 may be an entire environment or suite of software services and storage and processing devices. The data center 306 may be local to the environment and machine that processes the workflow manager 302 or it may be remote and external from the environment and machine or machines associated with the workflow manager 302. The data center 306 may also be virtual or virtualized.

FIG. 4 is a diagram of another workflow resource discovery and authentication system 400, according to an example embodiment. The workflow resource discovery and authentication system 400 is implemented as instructions on or within a machine-accessible and readable medium. The instructions when executed by a machine perform, inter alia; processing depicted with respect to the methods 100 and 200 of the FIGS. 1 and 2, respective. The workflow resource discovery and authentication system 400 is also operational over a network and the network may be wired, wireless, or a combination of wired and wireless.

The workflow resource discovery and authentication system 400 includes a workflow 401, an identity service 402, and a workflow manager 403. Each of these will now be discussed in turn. The workflow resource discovery and authentication system 400 is an alternative architectural layout for the workflow resource discovery and authentication system 300 represented and discussed with reference to the FIG. 3 above.

The workflow 401 is a data structure or metadata embodied in a machine-readable medium and capable of being read and modified by a machine process, such as the workflow manager 403. In an embodiment, the workflow 401 is an XML-defined data structure that includes a variety of information to identity tasks of a business process and each task having a variety of resources.

The workflow 401 includes a plurality of tasks. Each task is capable of being handled by one or more resources. Some tasks may be services or resources that are within a local environment of the workflow manager 402 while others of the tasks may be services or resources that are external and remote to the environment of the workflow manager 402. At least some of the resources are dynamically discovered and referenced within the workflow 401 in manners described herein. Other references within the workflow 401 may be statically referenced and defined, such as via a Uniform Resource Locater (URL) link.

The identity service 402 is also implemented as a set of software instructions that reside on a machine-accessible medium and is capable of being processed on a machine. Example identity services 402 were described above with reference to the system 300 of the FIG. 3 and at the beginning of the detailed discussion in which a variety of identity services 402 were described and incorporated by reference herein.

The identity service 402 dynamically authenticates resources on behalf of the workflow manager 403 and provides a reference or mechanism for contacting and interacting with the resources to the workflow 401. Any authentication mechanism may be used and may be resource-defined by policy. In other words, some resources may require more or stronger authentication than other resources and the type or authentication and the strength of authentication may be driven by policy and managed by the identity service 402.

The identity service 402 also authenticates tasks on behalf of the workflow manager 403 and the workflow 401. Furthermore, the workflow resource discovery and authentication system 400 may include a plurality of identity services 402 that cooperate with one another to authenticate tasks and resources and make them known and accessible to the workflow 401 and the workflow manager 403.

The workflow manager 403 is implemented as a set of software instructions that reside on a machine-accessible and readable medium and is capable of being processed on a machine. Example processing associated with the workflow manager 403 was presented above with reference to the methods 100 and 200 of the FIGS. 1 and 2, respectively, and with reference to the system 300 of the FIG. 3.

The workflow manager 403 coordinates authenticated resources and tasks and makes assignments to facilitate processing the workflow 401. This is done in a dynamic and real-time fashion that reflects the chaotic and real world conditions associated with business processes. The workflow manager 403 may also assign roles to selective groupings of the resources; the roles associated with policy and access rights for each of the tasks.

The workflow manager 403 may also evaluate policy and trust specifications to determine whether a particular resource can reassign a particular task within the workflow 401. Similarly, the workflow manager 403 may unilaterally reassign tasks of the workflow in a dynamic fashion when an existing assigned resource becomes unavailable or has permission rights revoked (de-authorized).

The workflow manager 403 permits references to dynamically discovered and authenticated resources and tasks to be used within a workflow 401 and reassigned when necessary. This permits a workflow 401 to be processed in a dynamic fashion and yet retains or even increases security via the identity service 402.

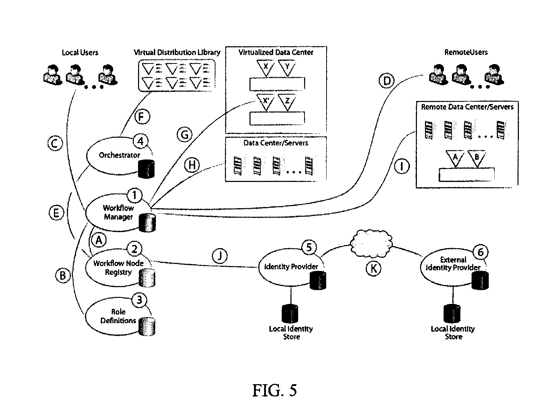

FIG. 5 is an example architectural layout of various components that implemented the techniques presented herein, according to an example embodiment. Each component represents a type of resource. Each resource implemented in a machine-accessible and readable medium and capable of being accessed and/or processed by a machine.

The architectural layout is presented for purposes of illustration only and is not intended to limit embodiments of the invention to the particular arrangement depicted in FIG. 5.

Each resource is connected in the diagram via a labeled link. The labeled link and the resources will now be discussed in detail for the example architectural layout presented in FIG. 5.

The diagram depicts a workflow node registry 2 that contains or references via A workflows (business processes) and nodes to participate in the workflow as managed by the workflow manager 2. At least some nodes or resources are dynamically acquired via J from an Identity Provider 5 (Identity Service). In the example diagram, the users are nodes that become dynamically discovered as they authenticate and come online within the network via their own identity providers 5. When they come on line, a reference to allow then to connect to the workflow is provided, such as web service interface linkages or RPC interface linkages, *etc.*

In some cases, managing individual identities for each user of the workflow may become a daunting administrative experience. Thus, the workflow manager 1 may use B to contact or use role definitions 3 for purposes of assigning a newly discovered resource to a particular role. This may be achieved via policy, perhaps provided by the identity service 5 in a dynamic fashion over J to the workflow manager 1. Policy may be dynamically or statically defined and used and in some cases it may be distributed from a local identity store via the identity provider 5.

The diagram also includes remote resources via one or more external identity providers 6 via K. The external identity providers 6 vouch and authenticate the remote resources and communicate with a local identity provider 5 via K. So, the workflow manager 1 may communicate with remote resources via D once these resources are dynamically authenticated via their identity providers 6 and a reference is passed via K to the local identity provider 5, which then communicates via J to the workflow node registry 2. The workflow node registry 2 then uses A to inform the workflow manager 1 of the participation of authenticated resources that are referenced and reachable via D. Link I shows that the remote resources may themselves be entire data centers.

The workflow may include utilization of resources that exists in a data center via G, H, and I. These can be virtualized resources as well.

In some cases, a service may not be running or a task may not be running. Here, an orchestrator 4 may interact with the workflow node registry via E or with the workflow manager 1 to instantiate and dynamically configure the tasks via F. These can be virtualized services started by the orchestrator 4, these services may register directly with the identity provider 5 or with the workflow node registry 2.

The diagram also shows local resources, as local users, that interact directly with the workflow manager 1 via C.

It is noted that the diagram specifically broke out the workflow manager 1 from the workflow node registry 2 and some embodiments presented herein took a different approach where the workflow manager 1 and registry 2 were subsumed with one another. Either approach may be used; each has benefits.

## Claims

1. A computer-implemented method for authenticating and discovering workflow resources, comprising:
receiving (110) a reference to a resource for use in an already processing workflow, wherein the resource is dynamically authenticated and discovered by an identity service;
enforcing (120) policy associated with the resource; and
assigning (130) a task of the workflow to the resource via the reference.

2. The method of claim 1, further comprising, removing (140) the resource from a pool of available resources associated with the workflow in response to a termination event.

3. The method of claim 2, further comprising, reassigning (141) the task to a different resource when the task is not completed and the resource is removed from the pool of available resources.

4. The method of claim 1, further comprising, identifying (150) the resource as one of a local resource associated with a local environment or a remote resource associated with an external and remote environment accessible over a wide-area network.

5. The method of claim 1, further comprising, assigning (160) the resource to a role in response to applying role definitions, and wherein the task is assigned to the resource in response to the role assignment.

6. The method of claim 1, further comprising, identifying (170) the task as one or more of the following: a local task associated with a local environment, a virtual task associated with a virtual environment, and an external or remote task associated with a remote and external environment over a network.

7. The method of claim 1, wherein enforcing policy further includes ensuring (121) a trust specification for the workflow and the resource is satisfied when enforcing the policy.

8. A computer-implemented method for authenticating and discovering workflow resources, comprising:
managing (210) the execution of a workflow from a first environment;
dynamically discovering (220) a new resource within a second environment for use with the workflow, wherein the new resource is authenticated via an identity service and becomes discovered as the workflow processes within the first environment; and
permitting (230) the new resource to access and to be associated with one or more unprocessed tasks of the workflow in response to policy.

9. The method of claim 8, further comprising, removing access (260) to the one or more of the unprocessed tasks when permission rights associated with the new resource are rescinded or cease to exist.

10. The method of claim 8, further comprising, initiating (240) a particular one of the one or more unprocessed tasks when requested to do so by the new resource, and wherein the particular unprocessed task is authenticated via the identity service and is also a remote and external virtual service.

11. The method of claim 8, further comprising, permitting (250) the new resource to reassign a number of the one or more unprocessed tasks in response to the policy to other different resources.

12. The method of claim 8, wherein dynamically discovering further includes recognizing (221) the identity service as an external identity service associated with the authenticating the new resource, which is also an external resource, and wherein the external identity service cooperates with a local identity service to ensure the new resource is authorized to access the workflow.

13. The method of claim 11, further comprising, permitting (251) the new resource to interact with the workflow and the unprocessed tasks via at least one of: a web services interface and a remote procedure call interface.

14. The method of claim 11, further comprising, assigning (252) the new resource to one or more roles recognized and used by the workflow in response to role calculations and definitions.

15. A system, comprising:
a workflow registry (301) implemented in a machine-readable medium; and
a workflow manager (302) implemented within the machine-readable medium and to process on a machine, wherein the workflow manager is adapted to dynamically permit resources to be discovered and associated with and also removed from tasks of a workflow in response to notifications received from the workflow registry indicating that the resources are authenticated for access or rescinded from access.

16. The system of claim 15, further comprising, one or more identity services (303) adapted to process on the machine or different machines, wherein the one or more identity services are adapted to authenticate the resources for registration with the workflow registry (301).

17. The system of claim 15, further comprising, role definitions (304) implemented in a machine-readable medium and accessible to the machine, wherein the workflow manager (302) uses the role definitions to assign the resources to roles for access to the tasks of the workflow.

18. The system of claim 15, further comprising, an orchestration service (305) adapted to process on the machine, wherein the orchestration service is adapted to dynamically initiate and configure a particular task on the machine for use with the workflow when the particular task is not already executing on the machine.

19. The system of claim 15, further comprising, a data center (306) implemented in the machine and accessible to the workflow manager (302), optionally adapted to be a virtualized data center including a plurality of services, and wherein a number of the services are dynamically authenticated and registered for use in the workflow as the tasks via the workflow registry (301).

20. The system of claim 19, wherein the data center (306) is remote and external from an environment associated with the workflow manager (302), and wherein the services include some services that are virtual services.

21. A system, comprising:
a workflow (401) embodied in a machine readable medium and adapted to be accessed and processed on one or more machines; and
an identity service (402) implemented and adapted to process on one of the machines; and
a workflow manager (403) implemented and adapted to process on one of the machines, wherein the workflow is adapted to include a plurality of tasks, each tasks capable of being handled by one or more resources, and at least some resources dynamically associated with at least some tasks after being dynamically detected and discovered on a network and dynamically authenticated with the identity service.

22. The system of claim 21, wherein at least some of the tasks are dynamically discovered and authenticated for use in the workflow (401) via the identity service (402).

23. The system of claim 21, wherein a number of the resources are identified by static references within the workflow (401).

24. The system of claim 21, wherein at least some of the tasks are services executing within a local environment of the workflow manager (403) and some others of the tasks are services executing within an external environment over a wide area network and remote from the local environment.

25. The system of claim 21, wherein the workflow manager (403) is adapted to assign roles to selective groupings of the resources, and wherein the roles are associated with policy and access rights for each of the tasks.

26. The system of claim 21, wherein the workflow manager (403) is adapted to evaluate policy to determine whether a particular resource can reassign a particular task associated with the workflow (401).

27. The system of claim 21, wherein the workflow manager (403) is adapted to reassign a particular task when an assigned resource to the particular task is detected as being unavailable or as being de-authorized for access to the workflow (401).

28. The system of claim 21, wherein the identity service (402) is adapted to cooperate with one or more external identity services to authenticate at least some of the resources for access to the workflow and the tasks of the workflow (401).

29. A computer program which when executing on a computer or computer network performs the steps of any one of claims 1 to 7, or 8 to 14.

30. The computer program of claim 29, stored on a computer-readable medium.
